# FASCICULE DE BREVET EUROPEEN

(11) **EP 0 577 496 B1**
(45) Date de publication et mention de la délivrance du brevet: **18.10.1995**
(21) Numéro de dépôt: 93401671.8
(22) Date de dépôt: 29.06.1993
(51) Int. Cl.: B62B 7/08

(54) **Poussette pliante pour enfant à pliage compact**
Kompakter zusammenklappbarer Kinderwagen
Compact collapsible push chair for children

(30) Priorité: 02.07.1992 FR 9208177
(43) Date de publication de la demande: 05.01.1994
(73) Titulaire: AMPAFRANCE S.A., F-92107 Boulogne-Billancourt Cedex (FR)
(72) Inventeur: Bigo, Jean, F-49300 Cholet (FR); Ageneau, Laurent, St Laurent S/Sevre, F-85380 Mortagne (FR)
(74) Mandataire: Casalonga, Axel

(56) Documents cités:
- DE-A- 3 024 657
- DE-A- 3 407 241
- FR-A- 2 385 363
- FR-A- 2 510 060
- FR-A- 2 556 680
- GB-A- 2 060 515
- GB-A- 2 139 161

## Description

La présente invention a pour objet une poussette pour enfant capable d'être aisément pliée sous la forme d'un ensemble compact.

On connaît différents types de poussettes pliantes pour enfants. Selon un premier type, illustré en particulier par le brevet français 1 507 446 (MACLAREN), le pliage du châssis de la poussette se fait sous la forme d'un fagot, c'est-à-dire que la poussette repliée occupe transversalement un espace en faisceau d'encombrement relativement faible qui peut ensuite être manipulé et transporté à la manière d'une canne. Dans la position repliée, les roues avant et arrière de la poussette sont placées deux à deux côte à côte, en position écartée au maximum. Lors du repliage en effet, l'écartement entre les roues avant et les roues arrière a été augmenté, cette augmentation de dimension en longueur étant la conséquence du mode de pliage et de la diminution relative d'épaisseur du fagot obtenu après pliage.

Un tel pliage présente un certain nombre d'avantages mais entraîne une augmentation d'encombrement en longueur de la poussette repliée. De plus, les extrémités des bras de poussée qui présentent généralement des poignées jouant le rôle de guidon dans la position déployée de la poussette se trouvent, en position repliée, à proximité immédiate des roues arrière de la poussette, ce qui fait que la personne transportant la poussette pliée risque de se salir au contact de ces roues.

Dans un autre type de poussette pliante illustré par exemple par le brevet français 2 607 770 (AMPAFRANCE), le châssis est constitué par deux ensembles latéraux de châssis repliables dans deux plans sensiblement verticaux et reliés transversalement par des organes d'entretoisement rigides qui peuvent comprendre en particulier un guidon de poussée transversal non pliable ainsi que les essieux des roues avant et arrière. Le pliage de la poussette se fait alors à plat par coulissement des montants portant le guidon le long de piètements avant de la poussette. Dans un mode de réalisation illustré dans ce document antérieur, les roues avant et arrière de la poussette se retrouvent, dans la position pliée, au voisinage les unes des autres en restant cependant écartées par leur essieu transversal non pliable. Grâce au coulissement des montants portant le guidon, on obtient par ce mode de pliage à plat, un encombrement de la poussette pliée très réduit en longueur. De plus, les roues se trouvant toutes sensiblement au même endroit et à l'opposé du guidon dans la position repliée, on ne risque pas lors du transport de la poussette pliée de se salir au contact des roues. Ce mode de pliage présente cependant l'inconvénient que la poussette pliée occupe un volume relativement important en surface, du fait même du pliage à plat, la largeur de la poussette pliée étant identique à la largeur de la poussette déployée.

La présente invention a pour objet la réalisation d'une poussette pliante pour enfant, qui autorise un pliage plus compact que les poussettes connues, le pliage se faisant en outre d'une manière particulièrement simple.

La poussette pliante pour enfant selon l'invention, comprend deux ensembles latéraux de châssis déformables. Chaque ensemble latéral de châssis comporte un piètement avant et un piètement arrière munis chacun d'au moins une roue à leur extrémité inférieure respective. Chaque ensemble latéral de châssis comporte en outre un bras-poussoir présentant une zone de préhension à son extrémité supérieure. Cette zone de préhension peut par exemple être conformée en poignée individuelle ou, dans une variante, faire partie d'un élément de guidon pliable.

La poussette selon l'invention présente en outre un châssis arrière en forme d'X articulé reliant entre eux les deux piètements arrière des ensembles latéraux de châssis. Des moyens sont également prévus pour supporter un hamac ou une nacelle de réception de l'enfant entre les deux ensembles latéraux de châssis en position déployée de la poussette.

Selon l'invention, chaque bras-poussoir peut coulisser parallèlement au piètement avant correspondant entre une position déployée où le bras-poussoir prolonge sensiblement le piètement avant et une position repliée où le bras-poussoir et le piètement avant correspondant sont disposés côté à côte. Chaque piètement arrière est articulé de préférence sur le piètement avant correspondant au voisinage de son extrémité supérieure respective.

Une bielle de liaison relie chaque bras-poussoir, sensiblement au voisinage de son extrémité inférieure, au piètement arrière correspondant. Une biellette de commande est articulée sur la bielle de liaison et reliée à un coulisseau monté coulissant sur chaque piètement arrière et sur lequel est également articulée l'extrémité supérieure du châssis arrière en forme d'X. De cette manière, lors du pliage, la biellette de commande provoque à la fois le pliage du châssis en X et le rapprochement des deux ensembles latéraux de châssis. Grâce à cette structure, le pliage de la poussette entraîne donc à la- fois la déformation dans deux plans sensiblement verticaux des deux ensembles latéraux de châssis avec rapprochement relatif des roues avant et des roues arrière et, simultanément la déformation du châssis en X arrière qui provoque le rapprochement des deux ensembles latéraux de châssis l'on par rapport à l'autre. La poussette pliée occupe donc un volume particulièrement compact. On notera en particulier que le coulissement des bras-poussoirs parallèlement aux piètements avant provoque la réduction de la longueur de la poussette pliée.

Dans la position pliée, les quatre roues ou ensembles de roues se trouvent proches les uns des autres, à l'opposé de l'extrémité des bras-poussoirs qui présente la zone de préhension, permettant ainsi un transport de la poussette pliée dans les meilleures conditions et sans risquer de se salir au contact des roues. En position dépliée, la rigidité du châssis de la poussette est assurée principalement par le châssis en X situé à l'arrière et qui relie entre eux les deux éléments de châssis latéraux. La rigidité peut être améliorée, si on le désire, au moyen de l'adjonction d'un marchepied articulé rigide placé à l'avant entre les extrémités inférieures des piètements avant et capable d'être également déformé lors du pliage de la poussette.

On notera que la position abaissée du châssis arrière en X dans la position déployée de la poussette favorise l'accès par l'arrière de la poussette, par exemple pour l'utilisation d'un panier à provisions qui peut avantageusement être disposé dans la partie basse de la poussette.

Dans un mode de réalisation avantageux de l'invention, la biellette de commande est articulée sur une partie de la bielle de liaison prolongeant celle-ci au-delà de son axe d'articulation sur le piètement arrière.

Les moyens de support du hamac comprennent de préférence deux tiges montées chacune à pivotement sur un manchon coulissant le long du piètement avant et du bras-poussoir. Ces deux manchons peuvent coulisser entre une position de butée basse définie sur le bras-poussoir et une position de butée haute définie par un coulisseau solidaire de l'extrémité supérieure du piètement avant, sur lequel le piètement arrière peut être articulé et à travers lequel peut coulisser le bras-poussoir. Des moyens peuvent être prévus, par exemple sous la forme d'un ressort de rappel, pour maintenir les manchons dans l'une ou l'autre de ces positions de butée lors du pliage de la poussette.

Comme indiqué précédemment, les zones de préhension des deux bras-poussoirs peuvent être constituées sous la forme de poignées indépendantes. Dans un mode de réalisation préféré, les deux bras-poussoirs sont reliés entre eux, par un ensemble formant guidon transversal en position déployée de la poussette. Cet ensemble peut être constitué de deux parties articulées entre elles et par rapport aux bras-poussoirs. Dans la réalisation préférée cependant, le guidon est constitué par une poignée centrale rotative dont la rotation, lors du pliage de la poussette, provoque la rotation et le rapprochement des deux bras-poussoirs respectifs. Les deux extrémités de la poignée centrale et les extrémités correspondantes repliées horizontalement des bras-poussoirs, constituant en position déployée de la poussette le guidon transversal, sont coupées à environ 45° par rapport à l'axe de rotation de la poignée centrale. Les extrémités des bras-poussoirs sont de préférence munies d'un manchon rotatif dont l'extrémité coupée à environ 45° coopère avec l'extrémité correspondante de la poignée centrale, une butée pouvant être avantageusement prévue afin de limiter le mouvement de rotation des manchons. Un moyen peut également être prévu sur la poignée centrale afin de la verrouiller dans la position déployée de la poussette.

Une telle disposition présente l'avantage d'augmenter la rigidité de la poussette en position déployée grâce à l'existence du guidon transversal. De plus le pliage de la poussette se trouve commandé d'une manière particulièrement aisée par une simple rotation de la poignée centrale du guidon transversal qui provoque le début de rapprochement relatif des éléments de châssis latéraux. Enfin lors du dépliage les extrémités coupées à environ 45° provoquent, dès le début de la rotation de la poignée centrale, l'écartement des deux bras-poussoirs en facilitant ainsi le dépliage de la poussette.

On notera que cette structure de guidon pliable qui présente des avantages considérables en combinaison avec la structure de châssis pliable précédemment indiquée, pourrait également être adpatée à d'autres structures de poussettes pliantes sans sortir du cadre de la présente invention. L'invention s'étend donc à une poussette pliante pour enfant comprenant deux ensembles latéraux de châssis déformables dont chacun comporte un bas-poussoir dont l'extrémité supérieure fait partie d'un élément de guidon pliable. Le guidon est constitué par une poignée centrale rotative dont la rotation, lors du pliage de la poussette, provoque le rapprochement des deux bras-poussoirs respectifs. Les deux extrémités de la poignée centrale et les extrémités correspondantes repliées horizontalement des bras-poussoirs, constituant en position déployée de la poussette le guidon transversal, sont coupées à environ 45° par rapport à l'axe de rotation de la poignée centrale. Les extrémités des bras-poussoirs peuvent tourner et sont également coupées à environ 45° afin de coopérer avec les extrémités de la poignée centrale.

Un dispositif de verrouillage en position déployée est de préférence associé à au moins l'un des bras-poussoir, le déverrouillage étant obtenu automatiquement par la rotation dudit bras-poussoir, rotation qui est provoquée comme indiqué précédemment par la rotation de la poignée centrale du guidon transversal.

Le dispositif de verrouillage peut avantageusement comprendre un simple pion élastique disposé dans un orifice du bras-poussoir et capable de coopérer avec un logement fixe par rapport au piètement avant. Ce logement peut par exemple être pratiqué dans le coulisseau précédemment mentionné et comporter un logement de verrouillage communiquant avec une rainure de déverrouillage. En variante, on peut utiliser un pion rigide solidaire du bras-poussoir et coopérant avec une rampe montée élastiquement à l'intérieur d'un logement de verrouillage.

Grâce à une telle disposition, la rotation de la poignée centrale du guidon transversal provoque donc, en même temps que le début du pliage, le déverrouillage du bras-poussoir, autorisant ainsi le coulissement de ce dernier sous l'action d'une poussée parallèlement au piètement avant.

Dans un mode de réalisation avantageux, un repose-pied comprenant deux branches repliables articulées à genouillère est disposé entre la partie basse respective des deux piètements avant. Dans la position complètement déployée de la poussette, l'articulation dépasse son point de verrouillage de sorte que le repose pied améliore la rigidité de la poussette en constituant un organe d'entretoisement transversal supplémentaire. Des moyens peuvent être prévus reliant le repose-pied à un élément du châssis, pour verrouiller et déverrouiller automatiquement le repose-pied lors du dépliage et du pliage de la poussette.

Dans un mode de réalisation préféré, les branches repliables du repose-pied sont montées à la partie basse des piètements avant au moyen d'une articulation à deux axes qui permet à la fois le repliage du repose-pied et son changement d'orientation, le repose-pied étant horizontal en position déployée de la poussette et dans le plan des deux piètements avant en position pliée de la poussette.

Deux tiges de commande fixées sur les coulisseaux du châssis arrière en X viennent agir, à la fin du mouvement de dépliage, sur les branches du repose-pied afin de verrouiller l'articulation à genouillère de manière automatique en position complètement déployée de la poussette. Les tiges de commande entraînent en outre la rotation du repose-pied dans son plan.

On peut mettre à profit l'existence de ces deux tiges de commande pour installer un sac à provisions souple dans la partie basse de la poussette.

On notera qu'un tel repose-pied pliant à commande automatique qui présente un grand intérêt en combinaison avec la structure de châssis pliable précédemment indiquée pourrait également être adapté à d'autres structures de poussettes pliantes sans sortir du cadre de la présente invention.

L'invention s'étend donc à une poussette pliante pour enfants comprenant deux ensembles latéraux de châssis déformables dont chacun comporte un piètement avant et un piètement arrière, un repose-pied muni de deux branches repliables articulées à genouillère étant monté entre la partie basse respective des deux piètements avant au moyen d'articulations à deux axes permettant à la fois le repliage du repose-pied et son chagnement d'orientation sous l'action d'organes de commande fixés au voisinage des piètements arrière.

Afin de permettre le transport aisé de la poussette en position complètement repliée, une sangle peut avantageusement être fixée, par exemple sur les deux coulisseaux du châssis arrière en X. Une traction sur cette sangle permet à la fois de terminer le mouvement de pliage complet de la poussette et en outre de transporter celle-ci dans cette position.

Bien entendu des moyens de verrouillage de sécurité en position complètement déployée de la poussette peuvent être prévus. On peut par exemple disposer un compas de verrouillage de sécurité entre la partie basse respective des piètement arrière.

L'invention sera mieux comprise à l'étude de la description détaillée d'un mode de réalisation pris à titre d'exemple nullement limitatif et illustré par les dessins annexés sur lesquels :
la figure 1 est une vue en élévation d'une poussette selon l'invention en position complètement déployée;
la figure 2 est une vue prise de l'arrière de la même poussette également en position complètement déployée;
la figure 3 est une vue en élévation analogue à la figure 1 de la poussette en cours de pliage;
la figure 4 est une vue en élévation schématique de la poussette en position complètement pliée;
la figure 5 est une vue agrandie d'un mode de réalisation d'un guidon poussoir pliable dans la position correspondant à la poussette complètement déployée;
la figure 6 est une vue analogue à la figure 5 montrant le début de la phase de pliage du guidon;
la figure 7 est une vue analogue à la figure 5 montrant la forme que prend le guidon lorsque la poussette est en position complètement repliée;
la figure 8 est une vue agrandie en perspective partielle avec arrachement interne d'un dispositif de verrouillage en position déployée d'un des bras-poussoirs de la poussette selon l'invention; et
la figure 9 est une vue en coupe de dessus de la partie basse de la poussette de la figure 1 montrant le repose pied articulé et ses moyens de commande.

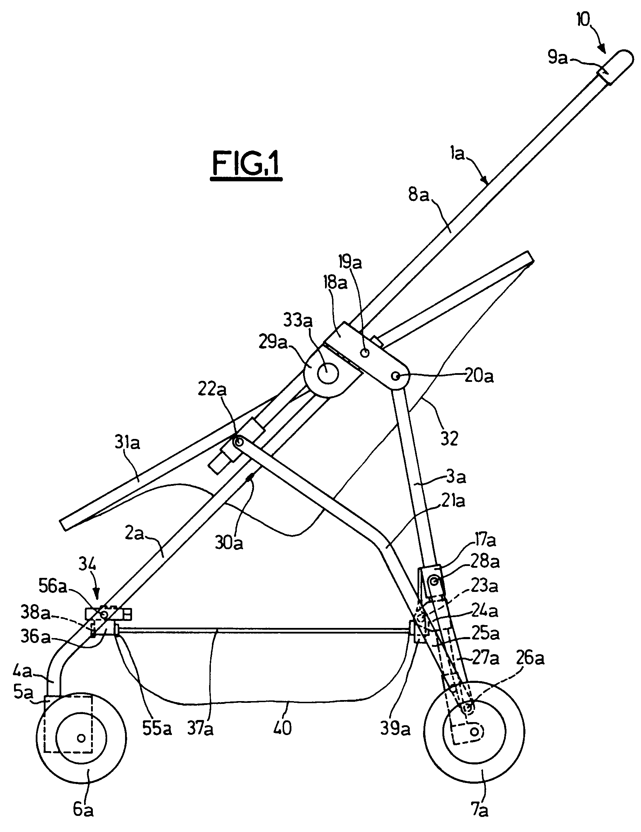

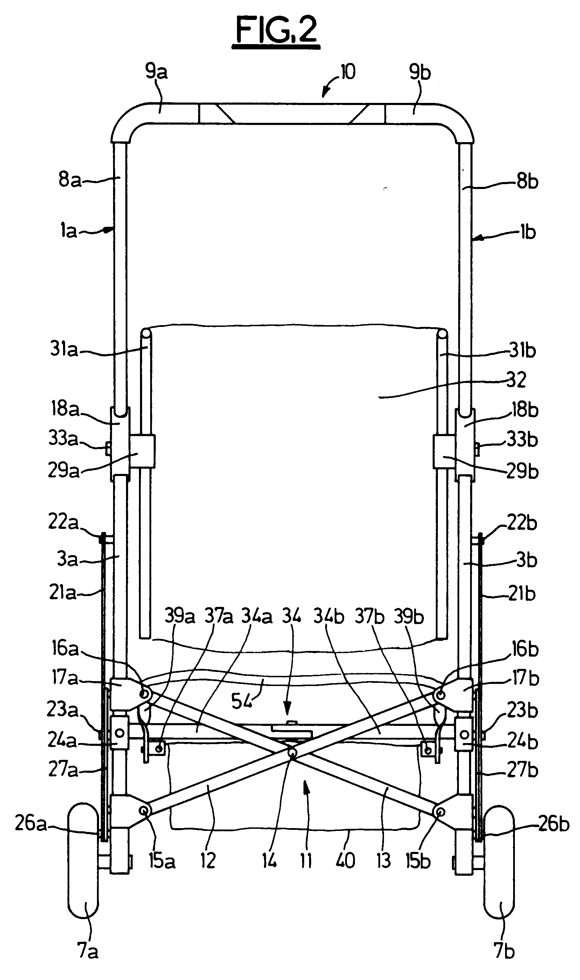

Telle qu'elle est illustrée sur les figures 1 à 3, la poussette conforme à l'invention, comprend deux ensembles latéraux de châssis référencés 1a et 1b dans leur ensemble visibles sur la figure 2. Ces deux ensembles latéraux de châssis sont identiques et on décrira les éléments qui constituent l'ensemble latéral la visible sur la figure 1 qui seront affectés de l'indice de référence **a** étant entendu que l'ensemble latéral de châssis 1b présente les mêmes éléments. qui seront affectés de l'indice de référence b.

En se reportant à la figure 1, il apparaît que l'ensemble latéral de châssis la comporte un piètement avant 2a et un piètement arrière 3a. Le piètement avant 2a présente une extrémité inférieure 4a légèrement incurvée vers le bas qui porte un dispositif de suspension 5a recevant une roue avant 6a ou, dans une variante, un bloc-roues constitué de deux roues. Le piètement arrière 3a présente à son extrémité inférieure un axe pour une roue arrière 7a, ou dans une variante un bloc-roues constitué de deux roues.

Toujours faisant partie de l'ensemble latéral de châssis 1a, on trouve sur la figure 1 un bras-poussoir 8a qui présente à son extrémité supérieure une zone de préhension coudée horizontalement 9a. On notera sur la figure 2 que les zones de préhension respectives 9a, 9b des deux bras-poussoirs 8a, 8b sont reliées entre elles de façon à former un guidon transversal référencé 10 dans son ensemble.

A la partie arrière de la poussette se trouve comme on le voit sur la figure 2 un châssis 11 en forme d'X articulé, constitué par une branche 12 et une branche 13 articulées en leur milieu par l'axe 14 de façon à présenter la forme d'un X. Les extrémités inférieures des branches 12 et 13 peuvent pivoter autour d'axes 15a, 15b fixes par rapport aux piètements arrière 3a et 3b au voisinage de l'extrémité inférieure de ces derniers. Les extrémités supérieures des branches 12 et 13 sont articulées sur des axes 16a, 16b solidaires de manchons coulissants 17a, 17b qui sont traversés de façon coulissante par les piètements arrière respectifs 3a, 3b.

Tous ces éléments peuvent être avantageusement réalisés sous la forme de tubes métalliques par exemple en alliage léger.

En se reportant à nouveau à la figure 1, on voit que l'élément latéral de châssis la comporte une pièce formant coulisseau 18a solidaire par l'axe 19a de l'extrémité supérieure du piètement avant 2a. Le coulisseau 18a comporte également un axe d'articulation 20a autour duquel peut pivoter le piètement arrière 3a. Le coulisseau 18a présente en outre un passage à travers lequel peut coulisser le bras-poussoir 8a parallèlement au piètement avant 2a. Dans la position complètement déployée de la poussette illustrée sur la figure 1, l'extrémité inférieure du bras-poussoir 8a fait saillie vers le bas par rapport au coulisseau 18a.

Une bielle de liaison 21a est articulée à son extrémité supérieure sur l'axe 22a solidaire de l'extrémité inférieure du bras-poussoir 8a. Au voisinage de son extrémité inférieure, la bielle de liaison 21a est articulée sur l'axe 23a solidaire de la partie inférieure du piètement arrière 3a. On notera que l'axe 23a est monté, dans l'exemple illustré, sur un manchon 24a fixe par rapport au piètement arrière 3a et placé entre les axes 15a et 16a (figure 2) des branches 12 et 13 du châssis arrière en X 11 dans la position complètement déployée de la poussette.

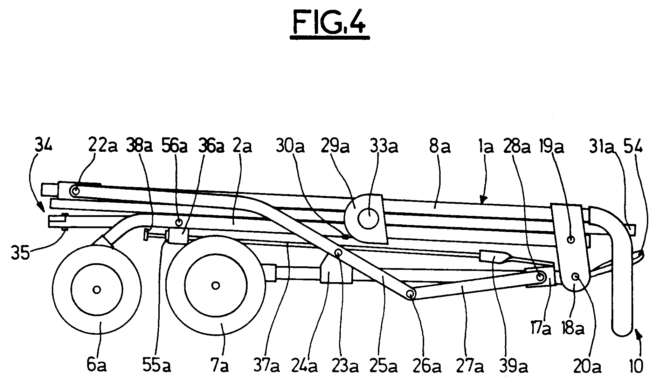

Dans le mode de réalisation illustré, la bielle de liaison 21a est légèrement coudée vers le bas comme on peut le voir sur la figure 1 de façon à améliorer la cinématique du pliage de la poussette ainsi que la compacité de la poussette pliée comme on le voit sur la figure 4. La bielle de liaison 21a se poursuit au-delà de son axe d'articulation 23a par une prolongation 25a munie à son extrémité inférieure d'un axe d'articulation 26a par rapport auquel peut pivoter une biellette de commande 27a, dont l'extrémité supérieure est articulée par l'axe 28a sur le manchon coulissant 17a qui est solidaire de l'extrémité supérieure de la branche 13 du châssis arrière en X 11. La même disposition se retrouve sur l'élément de châssis latéral 1b, la biellette de commande correspondante 27b étant articulée sur le manchon coulissant 17b solidaire de l'extrémité supérieure de la branche 12 du châssis 11. Comme on peut le voir sur la figure 2, les bielles de liaison 21a, 21b et les biellettes de commande associées 27a, 27b sont disposées de préférence à l'extérieur des éléments de châssis latéraux 1a et 1b entre ceux-ci et les roues arrière 7a, 7b et sont constituées par des tringles en fer plat afin de réduire l'encombrement de l'ensemble tout en lui conférant un excellente rigidité.

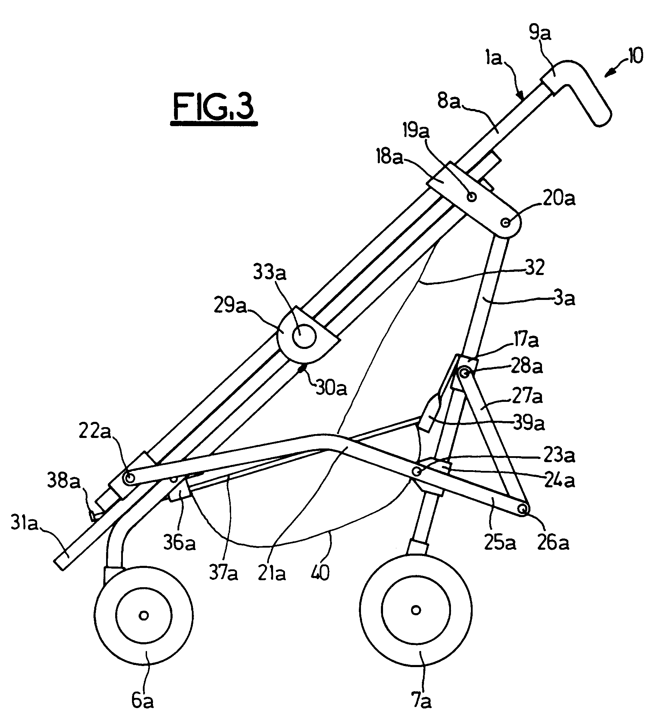

Dans l'ensemble latéral de châssis 1a se trouve également disposé un manchon coulissant 29a à travers lequel peuvent passer en y coulissant librement, le piètement avant 2a et le bras-poussoir 8a. Le manchon 29a au même titre, que le manchon similaire 29b de l'ensemble latéral de châssis 1b, peut occuper une position de butée haute définie par le coulisseau 18a dans la position complètement déployée de la poussette illustrée sur les figures 1 et 2. Il peut également occuper une position de butée basse définie par la butée 30a placée sur le piètement avant 2a et ce dans la position complètement repliée de la poussette illustrée sur la figure 4 et au cours du pliage comme on le voit sur la figure 3. Le manchon 29a joue le rôle de support pour une tige 31a qui peut recevoir une toile ou analogue formant une nacelle de réception de l'enfant 32. Des moyens, non illustrés sur les figures, sont prévus de manière classique sur les manchons 29a, 29b pour permettre le pivotement des tiges 31a, 31b et ainsi l'orientation de la nacelle 32 d'une position sensiblement assise illustrée sur la figure 1 à une position couchée pour les enfants en bas âge. Des moyens 33a, 33b sont également prévus pour bloquer les tiges 31a, 31b dans la position désirée par rapport aux manchons 29a, 29b.

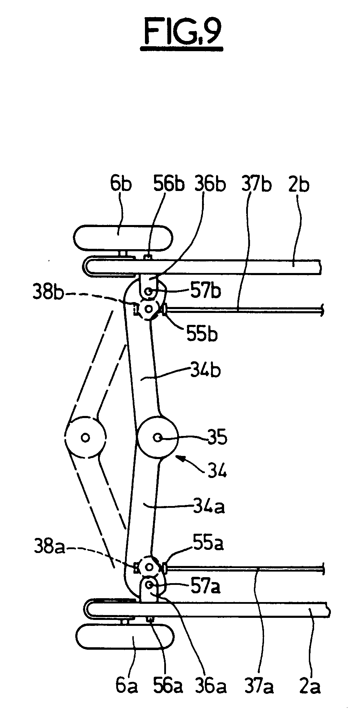

Un repose-pied rigide 34 comprend deux branches repliables 34a, 34b (figures 2 et 9) articulées à genouillère par l'axe central 35. Dans la position complètement déployée de la poussette illustrée en trait plein sur la figure 9, la position maximale d'écartement a donc été légèrement dépassée assurant ainsi le verrouillage de l'articulation à genouillère. Les extrémités des branches 34a, 34b sont reliées respectivement aux piètements avant 2a, 2b par des chapes 36a, 36b pouvant pivoter en rotation autour d'un axe 56a, 56b solidaire de la partie basse du piètement avant correspondant 2a, 2b. Les branches 34a, 34b peuvent en outre pivoter autour des axes 57a, 57b solidaires des chapes 36a, 36b. Deux tiges de commande 37a, 37b présentant à leur extrémité une butée 38a, 38b peuvent traverser un passage pratiqué dans les branches repliables 34a, 34b. Une autre butée 55a, 55b est placée sur chaque tige de commande 37a, 37b de façon à repousser les branches repliables 34a, 34b du repose-pied 34 lors du pliage. A l'extrémité opposée, les tiges de commande 37a, 37b sont fixées sur des pattes 39a, 39b solidaires des chapes coulissantes 17a, 17b placées aux extrémités supérieures des branches 12 et 13 du châssis en X 11. Une toile 40 peut être montée sur les tiges 37a, 37b de façon à former un sac à provisions souple dans la partie basse de la poussette.

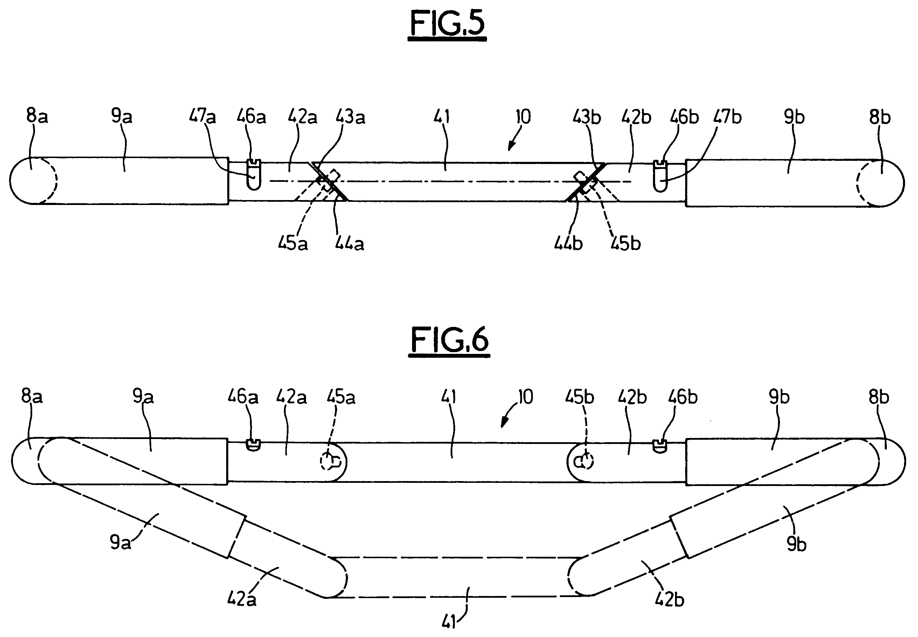

En se reportant maintenant aux figures 5 à 7 on va expliquer la structure et le fonctionnement du mode de réalisation particulier illustré dans lequel les zones de préhension 9a, 9b forment un guidon transversal 10 en position complètement déployée de la poussette comme illustré sur la figure 2. On retrouve sur la figure 5 les extrémités 9a et 9b repliées horizontalement des bras-poussoirs 8a, 8b. Une poignée centrale 41 relie entre elles les extrémités 9a, 9b qui comportent en outre chacune un manchon rotatif 42a, 42b capable de tourner par rapport aux extrémités respectives 9a, 9b. L'ensemble étant symétrique, on décrira la partie gauche affectée de l'indice a, étant entendu que la partie droite est identique et porte des références affectées de l'indice b. Les deux extrémités 43a, 43b de la poignée centrale 41 sont coupées selon un plan faisant un angle de 45°environ avec l'axe de rotation de la poignée 41 visible en trait mixte sur la figure 5. Cette surface 43a inclinée à 45° environ sert de palier de friction à l'encontre d'une autre surface également inclinée à 45°environ référencée 44a et pratiquée à l'extrémité du manchon rotatif 42a. Le manchon rotatif 42a est relié à la poignée 41 par un bout d'axe formant charnière 45a perpendiculaire aux deux surfaces de portée 43a et 44a et qui forme également un angle de 45° environ par rapport à l'axe de rotation de la poignée centrale 41. Un pion de butée 46a solidaire de l'extrémité 9a peut se déplacer entre les deux extrémités d'une fente oblongue 47a du manchon rotatif 42a afin de limiter l'ampleur du mouvement de rotation de ce dernier. Un dispositif de verrouillage non représenté sur les figures peut être prévu pour maintenir la poignée centrale 41 dans la position illustrée sur la figure 5.

Dans la position illustrée sur la figure 5, les axes charnières 45a, 45b se trouvent dans le plan de la figure tandis que les bras-poussoirs 8a, 8b sont perpendiculaires au plan de la figure. Dans ces conditions, on comprend que l'ensemble formé par la poignée centrale 41 et les extrémités 9a, 9b équipées de leurs manchons rotatifs 42a, 42b immobilisés par les butées 46a, 46b forment un ensemble rigide équivalent à une poutre transversale formant le guidon 10 qui permet de pousser la poussette d'enfant sans risque d'une quelconque déformation. On notera que les axes charnières 45a, 45b pourraient ne pas se trouver exactement dans le plan de la figure 5.

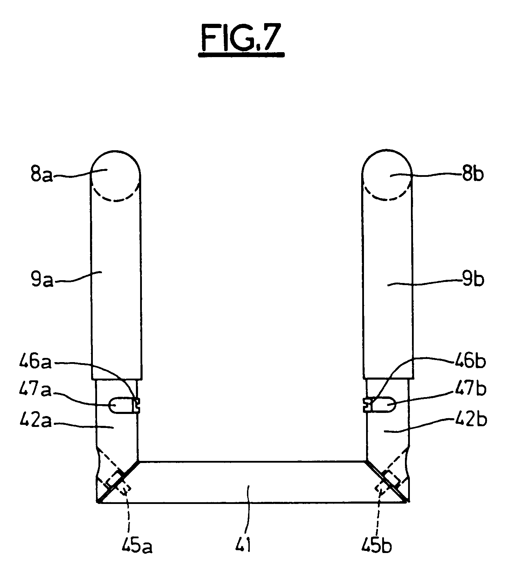

Si l'on fait subir une rotation d'environ 90° à la poignée centrale 41, ce qui entraîne une rotation égale des deux manchons 42a, 42b jusqu'à la deuxième position de butée dans les fentes 47a, 47b illustrée sur la figure 6, il apparaît que les deux axes charnières 45a, 45b toujours inclinés à 45°, définissent un plan qui est maintenant confondu avec le plan défini par les bras-poussoirs 8a et 8b c'est-à-dire un plan perpendiculaire au plan de la figure. Dans cette position, le guidon 10 formé par la partie centrale 41 et les extrémités 9a, 9b n'est plus rigide et peut être aisément déformé comme illustré en pointillés sur la figure 6. Cette déformation entraîne une légère rotation des deux bras-poussoirs 8a, 8b ainsi qu'un début de rapprochement grâce à la souplesse des tubes qui les constituent. Puis, en poursuivant la rotation, les extrémités 9a, 9b prennent la position illustrée sur la figure 7 c'est-à-dire se trouvent perpendiculaires à la poignée centrale 41 qui a subi une rotation de 180° environ par rapport à sa position illustrée sur la figure 6. Lors de ce mouvement, les manchons rotatifs 42a et 42b subissent à nouveau une rotation de 90° et viennent à nouveau en butée par la coopération des pions 46a, 46b avec les fentes oblongues 47a, 47b. Dans la position complètement pliée illustrée sur la figure 7, les bras-poussoirs 8a, 8b se sont rapprochés au maximum, avec les ensembles latéraux 1a, 1b dont ils font partie. L'encombrement transversal de la poussette correspond pratiquement à la longueur de la poignée centrale 41.

Le verrouillage en position complètement déployée de la poussette telle qu'illustrée sur les figures 1 et 2 se fait de préférence, dans le mode de réalisation illustré, en profitant de la rotation des bras-poussoirs 8a et 8b provoquée lors de la déformation du guidon 10.

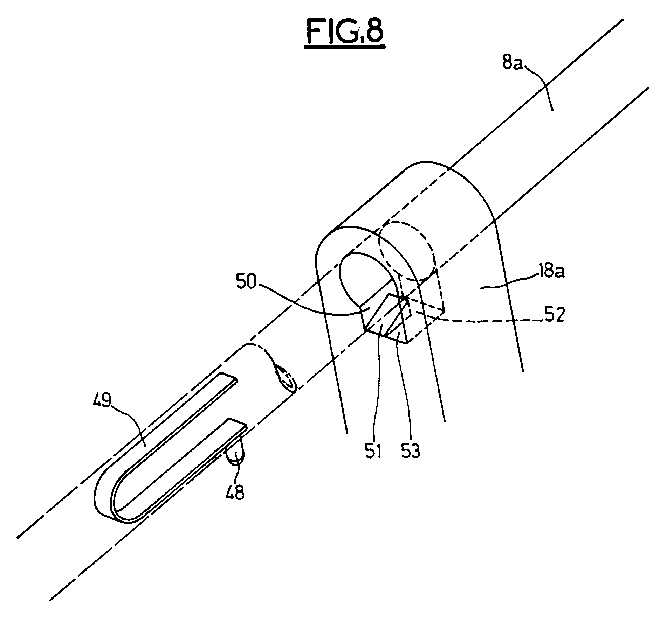

On se reportera à cet égard à la figure 8 où se trouve représenté un dispositif de verrouillage qui peut être prévu sur l'un des bras-poussoirs ou de préférence sur les deux. A titre d'exemple on décrira le dispositif de verrouillage prévu sur le bras-poussoir 8a. Ce dispositif comprend un pion élastique 48 faisant saillie à l'extérieur du tube constituant le bras-poussoir 8a et traversant à cet effet un trou pratiqué sur ce dernier. Le pion 48 est soumis à un effort de poussée provoqué par un ressort à lame recourbée 49 disposé à l'intérieur du bras-poussoir 8a.

Comme on l'a expliqué précédemment, le bras-poussoir 8a peut coulisser en passant librement à travers le coulisseau 18a sur lequel est fixé le piètement avant 2a et qui comprend l'axe d'articulation 20a du piètement arrière 3a. Comme on peut le voir sur la figure 8, le passage prévu dans le coulisseau 18a pour le bras-poussoir 8a présente un logement 50 muni d'une rampe inclinée 51 au-delà de laquelle se trouve un logement de verrouillage 52 qui communique avec une rainure 53 disposée parallèlement et à côté de la rampe inclinée 51.

Dans ces conditions, lorsque le bras-poussoir 8a se déplace de bas en haut en coulissant à l'intérieur du coulisseau 18a dans le passage 50, lors du dépliage de la poussette, le pion 48 vient en contact avec la rampe inclinée 51 et s'efface sous l'action de cette dernière jusqu'à pénétrer dans le logement 52 en étant poussé par le ressort 49. Le bras-poussoir 8a se trouve alors verrouillé en position par le pion 48 qui a pénétré dans le logement 52 et qui bute sur la face frontale de la rampe inclinée 51. Le déverrouillage s'effectue par simple rotation autour de son axe du bras-poussoir 8a, rotation qui dégage le pion 48 du logement 52 et lui permet de s'échapper du passage 50 par la rainure 53 ouverte vers l'extérieur.

La rotation du bras-poussoir 8a est de préférence provoquée comme on l'a vu précédemment par l'action sur la poignée centrale 41 du guidon de la poussette.

Pour faciliter l'opération de pliage de la poussette ainsi que son transport en position complètement repliée, on peut également prévoir comme illustré en particulier sur la figure 2, une sangle de transport 54 dont les extrémités sont fixées sur les deux manchons 17a, 17b aux extrémités supérieures du châssis en X 11. Enfin un compas de verrouillage de sécurité, non représenté sur les figures, peut avantageusement être disposé entre les parties basses respectives des piètements arrière 3a, 3b.

On va maintenant décrire rapidement le mode de pliage et de dépliage de la poussette selon l'invention en se référant aux figures et notamment aux figures 1 à 4.

En partant de la position dépliée et verrouillée illustrée sur la figure 1 et 2, le pliage de la poussette selon l'invention s'effectue de la manière suivante.

On saisit d'une main la poignée centrale 41 du guidon 10 et on lui fait subir une rotation d'environ 90° de façon à placer le guidon 10 dans la position illustrée sur la figure 6. Simultanément et de manière naturelle dès que le guidon 10 se trouve déverrouillé, un simple appui sur la poignée centrale 41 provoque le début de pliage du guidon 10 comme illustré en pointillés sur la figure 6. La rotation autour de leur axe des deux bras-poussoirs 8a, 8b qui en résulte automatiquement, provoque le déverrouillage des pions de verrouillage respectifs 48. La poursuite de la poussée vers le bas sur la poignée centrale 41 peut donc provoquer le mouvement de coulissement vers le bas des bras-poussoirs 8a et 8b. Ce mouvement entraîne, grâce aux bielles de liaison 21a, 21b et aux biellettes de commande 27a, 27b, le coulissement vers le haut des manchons 17a, 17b c'est-à-dire le pliage dans son plan du châssis en X arrière 11. Dans ces conditions, toujours par le même mouvement de poussée vers le bas d'une seule main sur la seule poignée centrale 41, les deux éléments de châssis latéraux 1a, 1b se plient dans leur plan vertical et simultanément se rapprochent par le pliage du châssis en X 11. Comme on peut le voir sur la figure 3, les roues arrière 7a se rapprochent des roues avant 6a. Dans le même temps, les tiges de commande 37a, 37b ont été poussées vers l'avant par le pivotement des piètements arrière 3a, 3b libérant ainsi l'articulation à genouillère du repose-pied 34 comme illustré en pointillés sur la figure 9. Lors du pliage les tiges de commande 37a, 37b provoquent en outre la rotation des branches 34a, 34b autour des deux axes 56a, 56b et 57a, 57b, le repose-pied 34 passant ainsi de sa position horizontale verrouillée dans une position pliée et compacte dans le même plan que les piètements avant 2a, 2b (voir figure 4). A cet effet, les tiges de commande 37a, 37b coulissent par rapport aux branches 34a, 34b en traversant les passages qui s'y trouvent pratiqués.

La position complètement pliée illustrée sur la figure 4 montre que la poussette de l'invention occupe alors un volume particulièrement restreint. Toutes les roues 6a, 6b sont disposées au voisinage les unes des autres en un seul groupe à l'opposé du guidon 10 qui est replié en trois parties (voir figure 7). La longueur de l'ensemble est réduite et correspond sensiblement à celle des piètements avant 2a. On notera que dans le mouvement de pliage, les tiges de support de nacelle 31a, 31b sont également déplacées en coulissement vers le bas en étant entraînées par les manchons 29a, 29b qui viennent en butée sur les pions 30a, 30b. Le transport de la poussette compacte ainsi repliée se fait aisément en saisissant la sangle 54.

Pour procéder au dépliage de la poussette à partir de la position pliée visible sur la figure 4 il suffit de saisir la poussette d'une seule main par la poignée centrale 41 et de tirer cette poignée centrale vers le haut tout en lui imprimant un mouvement de rotation inverse du mouvement de rotation nécessaire pour l'opération de pliage. Dès le début de cette rotation les bras-poussoirs 8a, 8b et donc les deux ensembles latéraux de châssis subissent un début d'écartement grâce à l'existence des surfaces 43, 44 inclinées à 45°. L'action de traction sur la poignée centrale 41 provoque le coulissement vers le haut des bras-poussoirs 8a, 8b c'est-à-dire le dépliage des deux éléments latéraux de châssis 1a, 1b et simultanément, grâce aux bielles de liaison 21a, 21b, et aux biellettes de commande 27a, 27b, le dépliage du châssis arrière en X qui entraîne la poursuite de l'écartement des deux éléments latéraux de châssis 1a, 1b. Simultanément, les tiges de commande 37a, 37b agissent sur les branches 34a, 34b du repose-pied 34 pour déplier celui-ci et le placer en position horizontale. Le mouvement de pivotement vers l'arrière des piètements arrière 3a, 3b provoque une traction sur les tiges de commande 37a, 37b dont les butées d'extrémité 38a, 38b provoquent, en fin de dépliage, le dépassement du point de verrouillage de l'articulation à genouillère. La poursuite du mouvement de rotation de la poignée centrale 41 suffit pour verrouiller le guidon 10 dans sa position de rigidification telle qu'illustrée sur la figure 5. Le verrouillage des bras de poussoir 8a, 8b s'effectue automatiquement par remontée des pions de verrouillage 48 qui pénètrent dans les trous de verrouillage correspondants 52 (figure 8). Dans le même temps, les manchons 29a, 29b qui supportent les tiges 31a et 31b de la nacelle 32 peuvent remonter jusqu'à venir en butée haute contre les coulisseaux 18a, 18b. Ce mouvement peut être assisté éventuellement par des moyens élastiques tels qu'un ressort non représenté sur les figures.

La structure de la poussette pliante selon l'invention permet donc non seulement d'obtenir un pliage extrêmement compact de faible longueur et avec toutes les roues placées au même endroit mais encore simplifie considérablement les opérations de pliage et de dépliage d'une telle poussette. De plus dans la configuration pliée telle qu'illustrée sur la figure 4, il est possible de faire tenir la poussette verticalement en appui sur les extrémités inférieures du bras-poussoir 8a, 8b et les roues avant 6a, 6b.

## Revendications

1. Poussette pliante pour enfant comprenant deux ensembles latéraux de châssis déformables (1) comportant chacun : un piètement avant (2) et un piètement arrière (3) muni chacun d'au moins une roue (6, 7) à leur extrémité inférieure respective; et un bras-poussoir (8) présentant une zone de préhension (9) à son extrémité supérieure; un châssis arrière en forme d'X articulé (11) reliant entre eux les deux piètements arrière (3a, 3b) des ensembles latéraux de châssis; et des moyens pour supporter un hamac ou une nacelle de réception de l'enfant entre les deux ensembles latéraux de châssis en position déployée, caractérisée par le fait que chaque bras-poussoir (8) peut coulisser parallèlement au piètement avant correspondant (2) entre une position déployée où le bras-poussoir prolonge sensiblement le piètement avant et une position repliée où le bras-poussoir et le piètement avant correspondant sont disposés côte à côte; chaque piètement arrière (3) est articulé sur le piètement avant correspondant (2) au voisinage de leurs extrémités supérieures respectives; une bielle de liaison (21) relie l'extrémité inférieure de chaque bras-poussoir (8) au piètement arrière correspondant; et une biellette de commande (27) est articulée sur la bielle de liaison (21) et reliée à un coulisseau (17) monté coulissant sur chaque piètement arrière (3a, 3b) et sur lequel est également articulée l'extrémité supérieure du châssis arrière en forme d'X (11) de façon, lors du pliage, à commander le pliage du châssis en X (11) et le rapprochement des deux ensembles latéraux de châssis.

2. Poussette pliante selon la revendication 1, caractérisée par le fait que le châssis arrière en X (11) est disposé, en position déployée, dans la partie basse des piètements arrière (3a, 3b).

3. Poussette pliante selon l'une des revendications 1 ou 2, caractérisée par le fait que la biellette de commande (27) est articulée sur une partie de la bielle de liaison (21) prolongeant celle-ci au-delà de son axe d'articulation (23) sur le piètement arrière.

4. Poussette pliante selon l'une quelconque des revendications précédentes, caractérisée par le fait que les moyens de support du hamac comprennent deux tiges (31) montées chacune à pivotement sur un manchon (29) coulissant le long du piètement avant (2) et du bras-poussoir (8).

5. Poussette pliante selon la revendication 4, caractérisée par le fait que les deux manchons (29) peuvent coulisser entre une position de butée basse définie sur le bras-poussoir (8) et une position de butée haute définie par un coulisseau (18) solidaire de l'extrémité supérieure du piètement avant (2), sur lequel le piètement arrière (3) est articulé et à travers lequel coulisse le bras-poussoir (8).

6. Poussette selon l'une quelconque des revendications précédente, caractérisée par le fait que les extrémités (9) des deux bras-poussoirs (8) sont recourbées et reliées entre elles par une poignée centrale (41) rotative dont la rotation provoque la rotation et le rapprochement ou l'écartement des deux bras-poussoirs (8) respectifs lors du pliage ou du dépliage de la poussette.

7. Poussette selon la revendication 6, caractérisée par le fait que les deux extrémités de la poignée centrale (41) et les extrémités correspondantes (9a, 9b) repliées horizontalement des bras-poussoirs (8a, 8b) présentent une portée à 45° par rapport à l'axe de rotation de la poignée centrale (41), les extrémités des bras-poussoirs étant munies d'un manchon rotatif (42a, 42b) dont l'extrémité présente une portée à 45° coopérant avec la portée correspondante de la poignée centrale (41) et des axes de charnière (45a, 45b) perpendiculaires aux deux portées correspondantes.

8. Poussette selon la revendication 7, caractérisée par le fait qu'une butée limite le mouvement de rotation des manchons (42) et de la poignée centrale (41) entre une position de rigidification où le plan défini par les deux axes de charnière (45) est sensiblement perpendiculaire au plan défini par les deux bras-poussoirs (8) et une position de pliage où le plan défini par les deux axes de charnière (45) est parallèle au plan défini par les deux bras-poussoirs (8).

9. Poussette selon l'une quelconque des revendications 6 à 8, caractérisée par le fait qu'un dispositif de verrouillage en position déployée est associé à au moins l'un des bras-poussoirs (8), le déverrouillage étant obtenu par rotation dudit bras-poussoir autour de son axe.

10. Poussette selon la revendication 9, caractérisée par le fait que le dispositif de verrouillage comprend un pion élastique (48) disposé dans un perçage du bras-poussoir (8) et capable de coopérer avec un logement (50) fixe par rapport au piètement avant (2).

11. Poussette selon les revendications 5 et 10, caractérisée par le fait que le logement (50) est pratiqué dans le coulisseau (18).

12. Poussette selon l'une des revendications 10 ou 11, caractérisée par le fait que le logement (50) comprend une rampe inclinée (51) délimitant un logement de verrouillage (52) communiquant avec une rainure de déverrouillage (53).

13. Poussette selon l'une quelconque des revendications précédentes, caractérisée par le fait qu'elle comprend un repose-pied (34) comportant deux branches repliables (34a, 34b) articulées à genouillère et disposées entre la partie basse des piètements avant (2).

14. Poussette pliante selon la revendication 13, caractérisée par le fait que les deux branches repliables (34a, 34b) sont montées à la partie basse des piètements avant au moyen d'une articulation à deux axes (56, 57).

15. Poussette pliante selon l'une des revendications 13 ou 14, caractérisée par le fait que deux tiges de commande (37a, 37b) sont reliées au châssis arrière en X (11) et viennent agir sur le repose-pied (34) lors du pliage et du dépliage de la poussette et provoquent à la fin du mouvement de dépliage le verrouillage de l'articulation à genouillère du repose-pied.

16. Poussette pliante selon les revendications 14 ou 15, caractérisée par le fait qu'un sac à provisions souple (40) est monté sur les deux tiges de commande (37a, 37b).

17. Poussette selon l'une quelconque des revendications précédentes, caractérisée par le fait qu'une sangle de transport (54) en position repliée est fixée sur les deux coulisseaux (17a, 17b) du châssis arrière en X (11).

18. Poussette selon l'une quelconque des revendications précédentes, caractérisée par le fait qu'un compas de verrouillage de sécurité est disposé entre la partie basse des piètements arrière (3a, 3b).

## Claims

1. Folding child's stroller comprising two deformable lateral chassis units (1) each comprising: a front leg (2) and a rear leg (3) each having at least one wheel (6, 7) at its respective lower end; and a push bar (8) having a holding area (9) at its upper end; an articulated X-shape rear chassis (11) joining together the two rear legs (3a, 3b) of the lateral chassis units; and means for supporting a hammock or a body for receiving the child between the two lateral chassis units when the stroller is deployed, characterized in that each push bar (8) is adapted to slide parallel to the respective front leg (2) between a deployed position in which the push bar is substantially aligned with the front leg and a folded position in which the push bar and the respective front leg are side by side; each rear leg (3) is articulated to the respective front leg (2) in the vicinity of their respective upper ends; a connecting link (21) connects the lower end of each push bar (8) to the respective rear leg; and an operating link (27) is articulated to the connecting link (21) and connected to a sliding piece (17) sliding on each rear leg (3a, 3b) to which is also articulated an upper end of the X-shape rear chassis (11) so that, when the stroller is folded up, it causes folding of the X-shape chassis (11) and movement towards each other of the two lateral chassis units.

2. Folding stroller according to claim 1 characterized in that the X-shape rear chassis (11) is in the lower part of the rear legs (3a, 3b) when the stroller is unfolded.

3. Folding stroller according to claim 1 or claim 2 characterized in that the operating link (27) is articulated to a part of the connecting link (21) extending the latter beyond its articulation to the rear leg (23).

4. Folding stroller according to any one of the preceding claims characterized in that the hammock support means comprise two rods (31) each pivotally mounted on a sleeve (29) sliding along the front leg (2) and the push bar (8).

5. Folding stroller according to claim 4 characterized in that the two sleeves (29) are adapted to slide between a lower abutment position defined on the push bar (8) and an upper abutment position defined by a sliding piece (18) attached to the upper end of the front leg (2), to which the rear leg (3) is articulated and through which the push bar (8) slides.

6. Stroller according to any one of the preceding claims characterised in that the ends (9) of the two push bars (8) are bent and joined together by a central handle (41) which can be rotated to rotate and move towards each other or away from each other the two push bars (8) respectively when folding or unfolding the stroller.

7. Stroller according to claim 6 characterized in that the ends of the central handle (41) and the respective horizontal ends (9a, 9b) of the push bars (8a, 8b) have a bearing surface at 45° to the rotation axis of the central handle (41), the ends of the push bars being provided with a rotatable sleeve (42a, 42b) whose end has a bearing surface at 45° adapted to cooperate with the respective bearing surface of the central handle (41) and hinge pins (45a, 45b) perpendicular to the respective two bearing surfaces.

8. Stroller according to claim 7 characterized in that an abutment is adapted to limit rotation of the sleeves (42) and the central handle (41) between a stiffening position in which the plane defined by the two hinge pins (45) is substantially perpendicular to the plane defined by the two push bars (8) and a folding position in which the plane defined by the two hinge pins (45) is parallel to the plane defined by the two push bars (8).

9. Stroller according to any one of claims 6 to 8 characterized in that a locking device operative in the unfolded position of the stroller is associated with at least one of the push bars (8), the device being unlocked by rotation of said push bar about its axis.

10. Stroller according to claim 9 characterised in that the locking device comprises a spring-loaded peg (48) in an opening in the push bar (8) adapted to cooperate with a housing (50) fixed relative to the front leg (2).

11. Stroller according to claim 5 and claim 10 characterized in that the housing (50) is in the sliding piece (18).

12. Stroller according to claim 10 or claim 11 characterized in that the housing (50) incorporates a ramp (51) delimiting a locking housing (52) communicating with an unlocking groove (53).

13. Stroller according to any one of the preceding claims characterized in that it comprises a folding footrest (34) having two branches (34a, 34b) joined by a toggle joint disposed between the lower parts of the front legs (2).

14. Folding stroller according to claim 13 characterized in that the two branches (34a, 34b) are mounted at the lower ends of the front legs by means of a respective two-axis articulation (56, 57).

15. Folding stroller according to claim 13 or claim 14 characterized in that two operating rods (37a, 37b) are joined to the X-shape rear chassis (11) and interact with the footrest (34) during folding and unfolding of the stroller and at the end of unfolding lock the toggle joint of the footrest.

16. Folding stroller according to claim 14 or claim 15 characterized in that a flexible shopping bag (40) is mounted on the two operating rods (37a, 37b).

17. Stroller according to any one of the preceding claims characterized in that a strap (54) for transporting the stroller when folded is fixed to the two sliding pieces (17a, 17b) of the X-shape rear chassis (11).

18. Stroller according to any one of the preceding claims characterized in that a safety locking hinged stay is disposed between the lower parts of the rear legs (3a, 3b).

## Patentansprüche

1. Zusammenklappbarer Kinderwagen mit zwei zusammenlegbaren seitlichen Rahmenteilen (1), von denen jeder aufweist: ein vorderes Stützbein (2) und ein hinteres Stützbein (3), die beide an ihrem unteren Ende jeweils mit wenigstens einem Rad (6, 7) versehen sind, sowie einen Schubholm (8), der an seinem oberen Ende einen Griffbereich (9) aufweist; mit einem hinteren X-förmigen, gelenkig zusammengehaltenen Gestell (11), das die beiden hinteren Stützbeine (3a, 3b) der seitlichen Rahmenteile miteinander verbindet; und mit Mitteln, um in der aufgeklappten Stellung zwischen den beiden seitlichen Rahmenteilen eine Hängematte oder einen Sitz für ein Kind zu haltern, dadurch gekennzeichnet, daß jeder Schubholm (8) zwischen einer ausgezogenen Stellung, in der der Schubholm das vordere Stützbein im wesentlichen verlängert, und einer zusammengeschobenen Stellung, in der der Schubholm und das jeweilige vordere Stützbein Seite an Seite angeordnet sind, parallel zu dem zugeordneten vorderen Stützbein (2) verschieblich ist; daß jedes hintere Stützbein (3) im Bereich seines jeweiligen oberen Endes an dem zugeordneten vorderen Stützbein (2) angelenkt ist; daß eine Verbindungsstrebe (21) das untere Ende jedes Schubholms (8) mit dem zugeordneten hinteren Stützbein verbindet; und daß eine Betätigungsstrebe (27) an der Verbindungsstrebe (21) derart angelenkt und mit auf jedem hinteren Stützbein (3a, 3b) verschieblich montierten Schiebern (17), an denen auch die oberen Ende des hinteren X-förmigen Gestells (11) angelenkt sind, derart verbunden ist, daß sie beim Zusammenklappen das Zuklappen des X-förmigen Gestells (11) und die Annäherung der beiden seitlichen Rahmenteile steuert.

2. Zusammenklappbarer Kinderwagen nach Anspruch 1, dadurch gekennzeichnet, daß das hintere X-förmige Gestell (11) in der aufgeklappten Stellung im unteren Bereich der hinteren Stützbeine (3a, 3b) angeordnet ist.

3. Zusammenklappbarer Kinderwagen nach einem der Ansprüche 1 oder 2, dadurch gekennzeichnet, daß die Betätigungsstrebe (27) an einem Teil der Verbindungsstrebe (21) angelenkt ist, der diese über ihre an dem hinteren Stützbein befindliche Gelenkachse (23) hinaus verlängert.

4. Zusammenklappbarer Kinderwagen nach einem der vorstehenden Ansprüche, dadurch gekennzeichnet, daß die Haltemittel der Hängematte zwei Streben (31) umfassen, die jeweils schwenkbar auf einer längs des vorderen Stützbeines (2) und des Schubholms (8) verschiebbaren Hülse (29) montiert sind.

5. Zusammenklappbarer Kinderwagen nach Anspruch 4, dadurch gekennzeichnet, daß die beiden Hülsen (29) zwischen einer, auf dem Schubholm (8) definierten, unteren Anschlagstellung und einer oberen Anschlagstellung verschiebbar sind, die durch den Schieber (18) definiert ist, der an dem oberen Ende des vorderen Stützbeines (2) befestigt ist, an dem das hintere Stützbein (3) angelenkt ist und in dem der Schubholm (8) verschieblich ist.

6. Kinderwagen nach einem der vorstehenden Ansprüche, dadurch gekennzeichnet, daß die Enden (9) der beiden Schubholme (8) gekrümmt und durch einen drehbaren mittleren Griff (41) miteinander verbunden sind, dessen Drehung die Verschwenkung und die Annäherung oder die Aufspreizung der beiden zugeordneten Schubholme (8) beim Zusammen- bzw. beim Aufklappen des Kinderwagens bewirken.

7. Kinderwagen nach Anspruch 6, dadurch gekennzeichnet, daß die beiden Enden des mittleren Griffs (41) und die zugeordneten horizontal umgebogenen Enden (9a, 9b) der Schubholme (8a, 8b) eine Anlagefläche mit einem Winkel von 45° gegenüber der Drehachse des mittleren Griffes (41) bilden, wobei die Enden der Schubholme mit einer drehbaren Hülse (42a, 42b) versehen sind, deren Ende eine Anlagefläche mit einem Winkel von 45° aufweist, die mit der zugeordneten Anlagefläche des mittleren Griffs (41) und mit Scharnierachsen (45a, 45b) zusammenwirkt, die rechtwinklig zu den beiden zugehörigen Anlageflächen verlaufen.

8. Kinderwagen nach Anspruch 7, dadurch gekennzeichnet, daß ein Anschlag die Drehbewegung der Hülsen (42) und des mittleren Griffs (41) zwischen einer aussteifenden Stellung, in der sich die von den beiden Scharnierachsen (45) definierte Ebene ungefähr rechtwinklig zu der von den beiden Schubholmen (8) definierten Ebene erstreckt, und einer Klappstellung, in der die von den beiden Scharnierachsen (45) definierte Ebene parallel zu der von den beiden Schubholmen (8) definierten Ebene ist, begrenzt.

9. Kinderwagen nach einem der Ansprüche 6 bis 8, dadurch gekennzeichnet, daß wenigstens einem der Schubholme (8) eine die aufgeklappte Stellung verriegelnde Verriegelungseinrichtung zugeordnet ist, wobei die Entriegelung durch Drehung des betreffenden Schubholms um seine Achse erreicht wird.

10. Kinderwagen nach Anspruch 9, dadurch gekennzeichnet, daß die Verriegelungseinrichtung einen federnden Zapfen (48) aufweist, der in einer Öffnung in dem Schubholm (8) angeordnet und dazu eingerichtet ist, mit einer in Bezug auf das vordere Stützbein (2) ortsfesten Aufnahme (50) zusammenzuwirken.

11. Kinderwagen nach den Ansprüchen 5 und 10, dadurch gekennzeichnet, daß die Aufnahme (50) in dem Schieber (18) angeordnet ist.

12. Kinderwagen nach einem der Ansprüche 10 oder 11, dadurch gekennzeichnet, daß die Aufnahme (50) eine geneigte Schrägfläche (51) aufweist, die eine Verriegelungsaufnahme (52) begrenzt, die mit einer Entriegelungsrille (53) in Verbindung steht.

13. Kinderwagen nach einem der vorstehenden Ansprüche, dadurch gekennzeichnet, daß er eine Fußstütze (34) aufweist, die zwei einklappbare Arme (34a, 34b) umfaßt, die kniehebelartig miteinander verbunden und zwischen den unteren Bereichen der vorderen Stützbeine (2) angeordnet sind.

14. Zusammenklappbarer Kinderwagen nach Anspruch 13, dadurch gekennzeichnet, daß die einklappbaren Arme (34a, 34b) im unteren Bereich der vorderen Stützbeine mittels eines Gelenkes mit zwei Achsen (56, 57) montiert sind.

15. Zusammenklappbarer Kinderwagen nach einem der Ansprüche 13 oder 14, dadurch gekennzeichnet, daß zwei Betätigungsstäbe (37a, 37b) mit dem hinteren X-förmigen Gestell (11) verbunden sind, die beim Zusammen- oder Aufklappen des Kinderwagens auf die Fußstütze (34) einwirken und die am Ende des Aufklappens das Kniegelenk der Fußstütze verriegeln.

16. Zusammenklappbarer Kinderwagen nach den Ansprüchen 14 oder 15, dadurch gekennzeichnet, daß eine verformbare Einkaufstasche (40) an den beiden Betätigungsstäben (37a, 37b) befestigt ist.

17. Kinderwagen nach einem der vorstehenden Ansprüche, dadurch gekennzeichnet, daß ein Gurt (54) zwischen den beiden Schiebern (17a, 17b) des hinteren X-förmigen Gestells (11) für den Transport in der zusammengeklappten Stellung befestigt ist.

18. Kinderwagen nach einem der vorstehenden Ansprüche, dadurch gekennzeichnet, daß zwischen den unteren Bereichen der hinteren Stützbeine (3a, 3b) ein Stab zur Sicherheitsverriegelung angeordnet ist.
